# EUROPÄISCHE PATENTSCHRIFT

(11) **EP 2 644 920 B1**
(45) Veröffentlichungstag und Bekanntmachung des Hinweises auf die Patenterteilung: **08.05.2019**
(21) Anmeldenummer: 13158515.0
(22) Anmeldetag: 11.03.2013
(51) Int. Cl.: F16C 33/78, F16C 33/58

(54) **Wälzlager mit einem in einer Nut in der Seitenfläche eines Lagerrings geklemmten Dichtelement**
Rolling bearing with a sealing element clamped in a groove in the face of a bearing ring
Roulement avec joint d'étanchéité bloqué dans une gorge prevue sur la face d'une bague de roulement

(30) Priorität: 30.03.2012 DE 102012205241
(43) Veröffentlichungstag der Anmeldung: 02.10.2013
(73) Patentinhaber: Schaeffler Technologies AG & Co. KG, 91074 Herzogenaurach (DE)
(72) Erfinder: Schröder, Rainer, 97440 Egenhausen (DE)

(56) Entgegenhaltungen:
- WO-A1-2011/012667
- DE-A1-102009 057 112
- DE-U- 1 956 147
- DE-U- 6 922 784
- DE-U1-202008 017 339
- JP-A- 2000 055 064
- JP-A- 2007 010 114
- JP-A- 2008 223 996
- JP-A- 2011 133 053

## Beschreibung

Die Erfindung betrifft ein Wälzlager. Das Wälzlager besteht aus einem ersten Lagerring, einem zweiten Lagerring und einem Dichtelement. Das Dichtelement dichtet einen Zwischenbereich zwischen dem ersten Lagerring und dem zweiten Lagerring ab, wobei das Dichtelement vermittels eines Klemmelements in eine Nut des ersten Lagerrings oder zweiten Lagerrings geklemmt ist.

### Hintergrund der Erfindung

Wälzlager haben mindestens zwei gegeneinander bewegliche Lagerringe, die beispielsweise ineinander (Radiallager) oder nebeneinander (Axiallager) angeordnet sein können. Der Zwischenbereich der beiden Ringe, in dem sich verschiedene Ausführungen von Wälzkörpern befinden, ist von einem Dichtelement vollständig überdeckt, so dass er von der Umgebung des Wälzlagers isoliert ist. Aufgrund der Relativbewegung der beiden Lagerringe gegeneinander hat das Dichtelement mit mindestens einem Lagerring schleifenden Kontakt.

Die deutsche Offenlegungsschrift DE 39 06 656 A1 offenbart eine entfernbare Lagerdichtung aus zwei Komponenten, nämlich eine halbstarre ringförmige Scheibe und ein elastisches ringförmiges Dichtelement, die aneinander befestigt sind und derart gestaltet sind, dass sie leicht in ein Lager eingebaut und herausgenommen werden können. Das Lager besitzt einen äußeren Laufring und einen inneren Laufring. Die Scheibe besitzt in ihrem äußeren oder inneren radialen Rand einen Schlitz, der es gestattet, dass ein Schraubendreher oder ein ähnliches Werkzeug eingesetzt und gedreht werden kann, um die Scheibe aus einer ringförmigen Nut in dem inneren oder äußeren Laufring herauszuschnappen.

Die europäische Patentschrift EP 0 577 912 B1 offenbart, dass Dichtelemente für Wälzlager üblicherweise zwischen den beiden Lagerringen angebracht sind und am feststehenden Ring befestigt werden. Im Falle von Axiallagern werden die Dichtelemente nach Stand der Technik an der Innenseite des Außenrings befestigt, so dass sie den sich gegen den Außenring drehenden Innenring schleifend kontaktieren.

Die WO 2011 012 667 A1 offenbart in einer Ausführungsform ein Dichtelement, wobei ein mit einem Elastomer-Schichtabschnitt versehener als Abkantung ausgebildeter Außenrandabschnitt des Dichtelements in eine Ringnut im äußeren Lagerring eingreift. Der Außenrandabschnitt ist von einem an der Stirnseite des Außenrings anliegenden Gehäusedeckel formschlüssig in der Ringnut gehalten. In einer weiteren Ausführungsform weist die Ringnut eine keilförmige Eindrehung auf. Im verbundenen Zustand von Dichtung und Lagerring greift ein einstückig angeformter, keilförmiger Ringvorsprung eines Elastomer-Schichtabschnitts der Dichtung formschlüssig in die keilförmige Eindrehung ein.

Ein Nachteil des Stands der Technik ist, dass das Dichtelement im Zwischenbereich der Lagerringe schwer zu montieren ist. Ferner ist eine Nut, in der das Dichtelement befestigt ist, aufwendig zu fertigen. Unter bestimmten Bedingungen, insbesondere bei Belastung durch Wirkung hoher axialer oder radialer Kräfte, kann die Dichtwirkung unzureichend sein.

Der Erfindung liegt die Aufgabe zugrunde, ein Wälzlager zu schaffen, das einfach zu fertigen, zu montieren und zu warten ist und das auch unter Belastung eine gute Dichtwirkung aufweist.

Die Aufgabe wird durch ein Wälzlager gelöst, das die Merkmale der Anspruchs 1 umfasst.

Das Wälzlager umfasst einen ersten Lagerring, einen zweiten Lagerring und einen Dichtelement. Die Erfindung kann in allen Arten von Axial- oder Radiallagern zum Einsatz kommen, zum Beispiel in Pendelrollenlagern. Das Dichtelement ist entweder mit dem ersten oder dem zweiten Lagerring fest und dem jeweiligen anderen schleifend verbunden. Das Dichtelement dichtet einen Zwischenbereich zwischen dem ersten Lagerring und dem zweiten Lagerring so ab, dass keine Verschmutzung von außen hinein gelangt oder keine in den Zwischenbereich eingebrachten Substanzen, wie etwa Schmiermittel, austreten. Das Dichtelement wird durch Verklemmung am betreffenden Lagerring befestigt. Dazu ist eine Außenfläche dieses Lagerrings mit einer Nut versehen, in der das Dichtelement verklemmt werden kann, indem das Dichtelement durch ein separates Klemmelement in der Nut befestigt wird. Das Klemmelement verklemmt das Dichtelement über eine Abkantung in der Nut. Zudem ist ein Absatz im Lagerring, der die Nut trägt, auf seiner dem Zwischenbereich zugewandten Seite ausgebildet. Die Nut ist so ausgestaltet, dass ihre Öffnung mit einer Außenfläche des Absatzes fluchtet.

Eine besonders vorteilhafte Ausführungsform der Erfindung sei am Beispiel eines Radiallagers beschrieben: Die Nut kann zusammen mit dem Absatz in die Planseite des äußeren Lagerrings eingedreht werden. Der Vorteil gegenüber dem Stand der Technik besteht darin, dass die Nut zusammen mit dem Absatz einfach in die Planseite des Außenringes eingedreht werden kann anstatt sie schräg in die schwerer begehbare Innenseite des Außenringes einbringen zu müssen. Ein weiterer Vorteil der Erfindung ist, dass eine Standardinnenkonstruktion des Wälzlagers beibehalten werden kann. Dies bedeutet, dass das Dichtelement ohne Änderungen der Laufbahnen des ersten Lagerrings bzw. des zweiten Lagerrings am Wälzlager montiert werden kann.

Erfindungsgemäß ist die Querschnittskontur der Nut dabei so ausgeformt, dass sich die Nut zu ihrer Öffnung hin vergrößert. Die dem Zwischenbereich zugewandte Seitenwand der Nut steht im rechten Winkel zur Außenfläche des Absatzes. Eine dem Zwischenbereich abgewandte zweite Seitenwand der Nut ist zu der ersten Seitenwand derart unter einem Keilwinkel angeordnet, so dass sich der Querschnitt der Nut zu ihrer Öffnung hin vergrößert.

Ein vorteilhafter Bereich für den Keilwinkel liegt zwischen 1° und 10°. Im Bereich von 1° bis 5° kann das Dichtelement am Wälzlager derart befestigt werden, dass die Dichtwirkung und die Haltekraft des Dichtelements besonders vorteilhaft ist.

Ein vorteilhafter Bereich für den Keilwinkel liegt im Bereich zwischen 2° bis 3°. Dieser Bereich liegt im Selbstklemmbereich für das Klemmelement.

Das Dichtelement besteht aus einer Ringfläche, an deren Außenrand die Abkantung angebracht ist. Die Abkantung steht zur Ringfläche im gleichen Keilwinkel wie die dem Zwischenbereich zugewandte Seitenwand der Nut zur Außenfläche der Abkantung, also im rechten Winkel. Die Abkantung dient zur Befestigung des Dichtelements in der Nut. Die Ringfläche des Dichtelements ist so bemaßt, dass es mindestens den ganzen Zwischenbereich zwischen erstem und zweitem Lagerring überdeckt und dass die dem Zwischenraum zugewandte Seite der Abkantung entlang der ganzen Nut formschlüssig mit ihrer dem Zwischenbereich zugewandten Seitenwand zusammenwirkt. Mit der Außenfläche des Lagerrings, der keine Nut trägt, wirkt die Ringfläche des Dichtelements dichtend und kraftschlüssig zusammen, so dass sich der Lagerring gegen das Dichtelement drehen kann.

Die dem Zwischenbereich zugewandte Außenfläche sowie die dem Zwischenbereich zugewandte Außenfläche der Abkantung ist mit einem elastischen Material versehen. Das elastische Material muss zumindest dort aufgebracht sein, wo das Dichtelement an der Seitenwand der Nut, der Außenfläche des ersten Lagerrings und der Außenfläche des zweiten Lagerrings anliegt. Die Deformation des elastischen Materials erhöht die Dichtwirkung des Dichtelements. Das elastische Material kann in einer bevorzugten Ausführungsform der Erfindung aus einem Elastomer bestehen. Das Elastomer kann beispielsweise vollflächig auf die Seite des Dichtelements aufgebracht werden. Vorzugsweise wird das Elastomer auf das Dichtelement aufvulkanisiert.

Das Klemmelement kann derart gestaltet sein, dass es über den Umfang der Nut gleichverteilte Klemmstellen erzeugt. Das Klemmelement kann dabei aus einem einzigen Werkstück bestehen, beispielsweise aus einem Ring. Ebenso können mehrere einzelne Werkstücke zur Klemmung am Umfang der Nut gleichverteilt sein. Das Klemmelement kann als Keilring oder als Keilhülse gefertigt sein und wird zur Klemmung in die Nut gepresst. Durch den Keilwinkel erreicht man eine sehr hohe axiale Haltekraft des Dichtelements. Das Klemmelement kann als Ring oder als offen geschlitzter Ring ausgeführt werden.

Das Klemmelement hat vorzugsweise eine keilförmige Querschnittskontur. Durch das Keilprofil wird eine ausreichende Verpressung des elastischen Materials in der Nut erzeugt und damit eine sehr hohe Dichtwirkung erreicht. Zugleich wird dadurch eine hohe Haltekraft des Dichtelements, insbesondere unter axialer Belastung erreicht.

Die Querschnittskontur des Klemmelements ist dergestalt, dass der Keilwinkel zwischen einer dem Zwischenbereich abgeneigten Seitenfläche und einer dem Zwischenbereich zugeneigten Seitenfläche des Klemmelements gleich dem Keilwinkel ist, unter dem sich die Nut zu ihrer Öffnung hin verbreitert. Der Vorteil dieser Ausführungsform ist, dass eine Kraft gleichmäßig über eine große Fläche verteilt ist und nicht nur entlang einer Kante in der Nut verpresst wird. Dadurch ist eine gute Dichtwirkung als auch eine ausreichende Haltekraft des Dichtelements gewährleistet.

Nachfolgend ist das erfindungsgemäße Wälzlager - ohne Beschränkung der Erfindung auf einen speziellen Lagertyp - am Ausführungsbeispiel eines Radiallagers unter Bezugnahme auf die beigefügten Zeichnungen näher beschrieben. Es zeigen:
- Fig. 1A: eine teilweise, perspektivische Ansicht eines Lagerringes eines Radiallagers, dessen eine Außenfläche eine erfindungsgemäße Nut aufweist;
- Fig. 1B: eine teilweise Schnittansicht durch den Lagerring eines Radiallagers, dessen eine Außenfläche eine erfindungsgemäße Nut aufweist;
- Fig. 2: eine teilweise Schnittansicht des erfindungsgemäßen Wälzlagers in der Umgebung der Nut und des Zwischenbereiches zwischen erstem und zweitem Lagerring;
- Fig. 3A: eine Schnittansicht durch ein ringförmiges Dichtelement mit einer Abkantung an der Außenfläche des Rings, welches seitens der Abkantung vollflächig mit einem elastischen Material beschichtet ist;
- Fig. 3B: eine Schnittansicht eines Klemmelements, dessen Querschnittskontur sich keilförmig unter einem Keilwinkel β verbreitert; und
- Fig. 4: eine Schnittansicht des gesamten erfindungsgemäßen Wälzlagers, das mit dem Dichtelement versehen ist.

In den Zeichnungen werden für gleiche oder gleich wirkende Elemente der Erfindung identische Bezugszeichen verwendet.

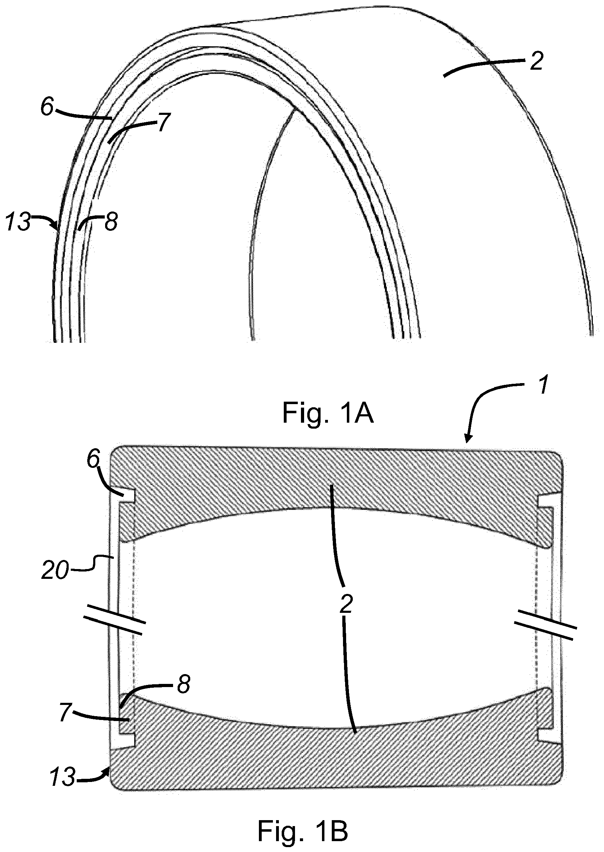

**Fig. 1A** zeigt eine perspektivische Teilansicht eines ersten Lagerrings 2 eines Wälzlagers 1 (siehe Fig. 1B). In seiner Außenfläche 13 sind eine Nut 6 und ein Absatz 7 ausgebildet.

**Fig. 1B** zeigt eine teilweise Schnittansicht des erfindungsgemäßen Wälzlagers 1, wobei lediglich der erste Lagerring 2 dargestellt ist. In seiner Außenfläche 13 sind eine Nut 6 und ein Absatz 7 ausgebildet. Das Dichtelement ist in der Nut 6 befestigt. Ebenso liegt das Dichtelement 20 an dem Absatz 7 an, um so die dichtende Wirkung zu erzielen.

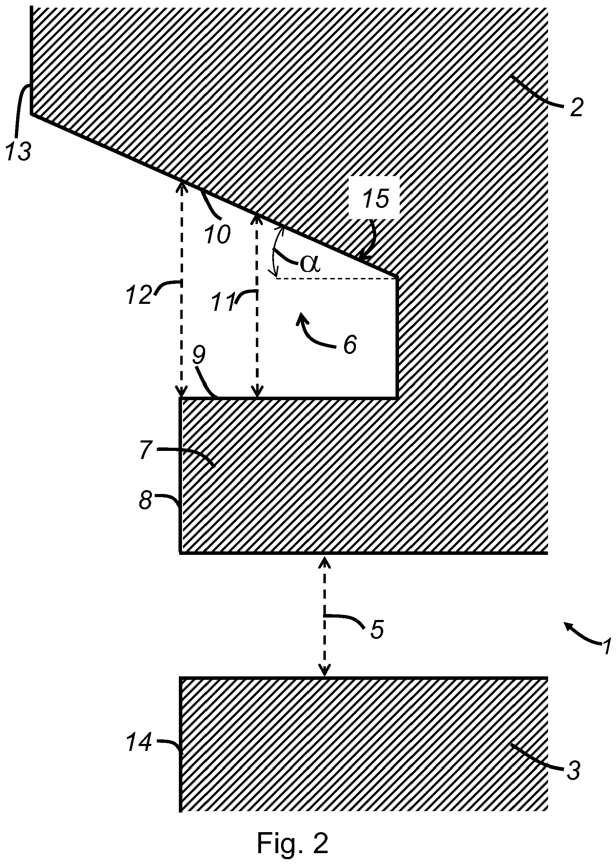

**Fig. 2** zeigt eine teilweise Schnittansicht des erfindungsgemäßen Wälzlagers 1, wobei ein Teil des ersten Lagerrings 2 und des zweiten Lagerrings 3 dargestellt sind. Zwischen den beiden Lagerringen 2 und 3 ist ein Zwischenbereich 5 ausgebildet. In der Außenfläche 13 des ersten Lagerrings 2 sind eine Nut 6 und ein Absatz 7 ausgebildet. Die Öffnung 12 der Nut 6 fluchtet mit einer Außenfläche 8 des Absatzes 7. Eine dem Zwischenbereich 5 zugewandte erste Seitenwand 9 der Nut 6 verläuft im rechten Winkel zu der Außenfläche 8 des Absatzes 7. Eine dem Zwischenbereich 5 abgewandte zweite Seitenwand 10 der Nut 6 ist zu der ersten Seitenwand 9 derart unter einem Keilwinkel α angeordnet, dass sich der Querschnitt 11 der Nut 6 zu ihrer Öffnung 12 hin vergrößert.

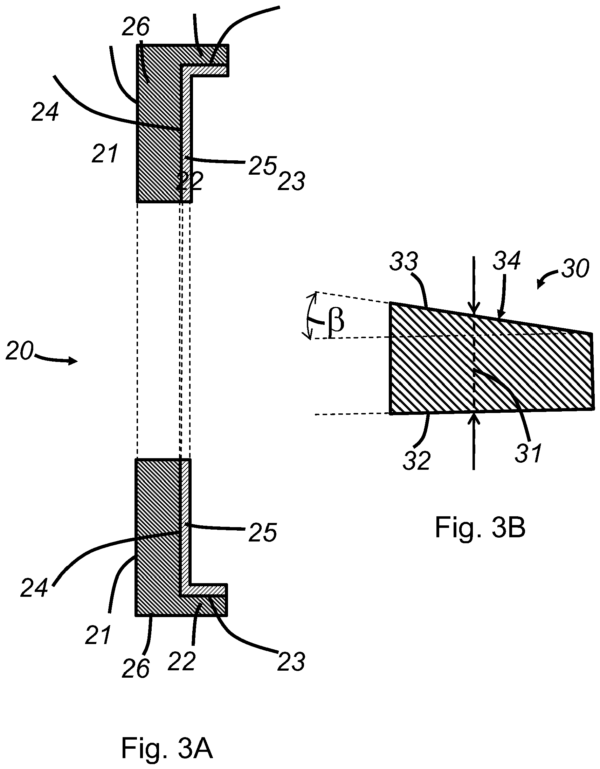

**Fig. 3A** zeigt eine Schnittansicht durch ein Dichtelement 20, das aus einer Ringfläche 21 mit einer Abkantung 22 gebildet ist. Die dem Zwischenbereich 5 zugewandte Fläche 24 des Dichtelements 20 sowie die dem Zwischenbereich 5 zugewandte Fläche 23 der Abkantung 22 ist mit einem elastischen Material 25 versehen.

**Fig. 3B** zeigt eine Schnittansicht durch ein Klemmelement 30. Zwischen einer seiner dem Zwischenbereich 5 abgeneigten Seitenfläche 33 und einer seiner dem Zwischenbereich 5 zugeneigten Seitenfläche 32 ist ein Keilwinkel β ausgebildet. Folglich verbreitert sich der Querschnitt 31 des Klemmelements 30, wobei die Querschnittskontur 34 des Klemmelements 30 keilförmig ist.

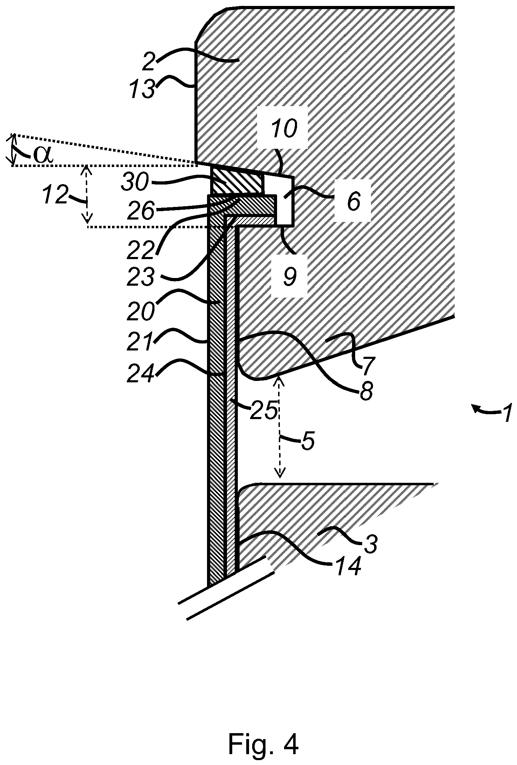

**Fig. 4** zeigt eine Schnittansicht eines Teil des erfindungsgemäßen Wälzlagers 1 in der Umgebung der Nut 6 und des Zwischenbereiches 5 zwischen dem ersten Lagerring 2 und dem zweiten Lagerring 3. Weiterhin ist das Dichtelement 20 mit dem ersten Lagerring 2 verklemmt und liegt mit seiner Fläche 23 der Abkantung 22 an. Die dem Zwischenbereich 5 zugewandte Fläche 24 des Dichtelements 20 sowie die dem Zwischenbereich 5 zugewandte Fläche 23 des Abkantung 22 ist vollflächig mit einem elastischen Material 25 versehen. Das Dichtelement 20 ist mit einem Klemmelement 30 in der Nut befestigt bzw. geklemmt. Bei Klemmelement 30 ist zwischen einer abgeneigte Seitenfläche 33 und einer dem Zwischenbereich 5 zugeneigte Seitenfläche 32 ein Keilwinkel β ausgebildet.

Fig. 4 stellt dar, wie der erste Lagerring 2, der zweite Lagerring 3, das Dichtelement 20 und das Klemmelement 30 zusammenwirken. Die Abkantung 22 des Dichtelements 20 wirkt mit der ersten Seitenwand 9 der Nut 6 im ersten Lagerring 2 oder zweiten Lagerring 3 formschlüssig zusammen. Zugleich wirkt das Dichtelement 20 mit der Außenfläche 14 des zweiten Lagerrings 3 kraftschlüssig zusammen. Die dem Zwischenbereich 5 zugewandte Außenfläche 24 des Dichtelements 20 sowie die dem Zwischenbereich 5 zugewandte Außenfläche 23 der Abkantung 22 ist mit einem elastischen Material 25 versehen, welches an der ersten Seitenwand 9 der Nut 6, der Außenfläche 13 des ersten Lagerrings 2 und der Außenfläche 14 des zweiten Lagerrings 3 anliegt.

Das Klemmelement 30 verklemmt das Dichtelement 20 über die Abkantung 22 in der Nut 6. In der dargestellten Ausführungsform ist die Querschnittskontur 34 des Klemmelements 30 dergestalt, dass der Keilwinkel β zwischen einer dem Zwischenbereich 5 abgeneigten Seitenfläche 33 und einer ihr zugeneigten Seitenfläche 32 gleich dem Keilwinkel α ist, dass also die Querschnittskontur 15 der Nut 6 dasselbe Winkelprofil wie die Querschnittskontur 34 des Klemmelements 30 hat.

Die Erfindung wurde unter Bezugnahme auf eine bevorzugte Ausführungsform beschrieben. Es ist für einen Fachmann jedoch selbstverständlich, dass Änderungen, Abwandlungen der Erfindung und ihre Anwendung auf alle Arten von Wälzlagern durchgeführt werden können, ohne dabei den Schutzbereich der nachstehenden Ansprüche zu verlassen.

### Bezugszeichenliste

- 1: Wälzlager
- 2: Erster Lagerring
- 3: Zweiter Lagerring
- 5: Zwischenbereich
- 6: Nut
- 7: Absatz
- 8: Außenfläche des Absatzes
- 9: erste Seitenwand der Nut
- 10: zweite Seitenwand der Nut
- 11: Querschnitt der Nut
- 12: Öffnung der Nut
- 13: Außenfläche des ersten Lagerrings
- 14: Außenfläche des zweiten Lagerrings
- 15: Querschnittskontur der Nut
- 20: Dichtelement
- 21: Ringfläche
- 22: Abkantung
- 23: Fläche der Abkantung
- 24: Fläche des Dichtelements
- 25: Elastisches Material
- 26: Fläche der Abkantung 30 Klemmelement
- 31: Querschnitt des Klemmelements
- 32: Seitenfläche des Klemmelements
- 33: Seitenfläche des Klemmelements
- 34: Querschnittskontur des Klemmelements
- α: Keilwinkel der Nut
- β: Keilwinkel des Klemmelements

## Patentansprüche

1. Wälzlager (1), mit einem ersten Lagerring (2), einem zweiten Lagerring (3) und einem Dichtelement (20), das einen Zwischenbereich (5) zwischen dem ersten Lagerring (2) und dem zweiten Lagerring (3) abdichtet, wobei das Dichtelement (20) in einer Nut (6) des ersten Lagerrings (2) oder zweiten Lagerrings (3) geklemmt ist,
wobei eine dem Zwischenbereich (5) zugewandte erste Seitenwand (9) der Nut (6) im rechten Winkel zu einer Außenfläche (8) eines Absatzes (7) verläuft, wobei eine dem Zwischenbereich (5) abgewandte zweite Seitenwand (10) der Nut (6) zu der ersten Seitenwand (9) derart unter einem Keilwinkel (α) angeordnet ist, dass sich der Querschnitt (11) der Nut (6) zu ihrer Öffnung (12) hin vergrößert, und wobei ein separates Klemmelement (30) vorgesehen ist, welches das Dichtelement (20) über eine Abkantung (22) des Dichtelements (20) in der Nut (6) verklemmt.

2. Wälzlager (1) nach Anspruch 1, wobei im ersten Lagerring (2) oder im zweiten Lagerring (3) der Absatz (7) derart ausgebildet ist, dass die Außenfläche (8) des Absatzes (7) mit der Öffnung (12) der Nut (6) fluchtet.

3. Wälzlager (1) nach Anspruch 1, wobei der Keilwinkel (α) im Bereich zwischen 1° und 10°, insbesondere im Bereich zwischen 1° und 5°, liegt.

4. Wälzlager (1) nach Anspruch 3, wobei der Keilwinkel (α) im Bereich zwischen 2° und 3° liegt.

5. Wälzlager (1) nach einem der Ansprüche 1 bis 4, wobei das Klemmelement (30) aus einem Ring oder mehreren Ringsegmenten besteht, die gleichverteilt in der Nut (6) angeordnet sind.

6. Wälzlager (1) nach einem der Ansprüche 1 bis 5 , wobei das Klemmelement (30) eine keilförmige Querschnittskontur (34) besitzt.

7. Wälzlager (1) nach Anspruch 6, wobei die Querschnittskontur (34) des Klemmelements (30) dergestalt ist, dass der Keilwinkel (β) des Klemmelements (30) gleich dem Keilwinkel (α) der Nut (6) ist.

8. Wälzlager (1) nach einem der Ansprüche 1 bis 7, wobei das Dichtelement (20) aus einer Ringfläche (21) mit der Abkantung (22) ausgebildet ist, welche mit der ersten Seitenwand (9) der Nut (6) im ersten Lagerring (2) oder zweiten Lagerring (3) formschlüssig sowie mit der Außenfläche (14) des zweiten Lagerrings (3) beziehungsweise der Außenfläche (13) des ersten Lagerrings (2) kraftschlüssig zusammenwirkt.

9. Wälzlager (1) nach Anspruch 8, wobei die dem Zwischenbereich (5) zugewandte Außenfläche (24) des Dichtelements (20) sowie die dem Zwischenbereich (5) zugewandte Außenfläche (23) der Abkantung (22) mit einem elastischen Material (25) versehen ist, welches an der ersten Seitenwand (9) der Nut (6), der Außenfläche (13) des ersten Lagerrings (2) und der Außenfläche (14) des zweiten Lagerrings (3) anliegt.

## Claims

1. Anti-friction bearing (1), having a first bearing ring (2), a second bearing ring (3) and a sealing element (20) which seals an intermediate region (5) between the first bearing ring (2) and the second bearing ring (3), the sealing element (20) being clamped in a groove (6) of the first bearing ring (2) or second bearing ring (3), a first side wall (9) of the groove (6), which first side wall (9) faces the intermediate region (5), running at a right angle with respect to an outer face (8) of a shoulder (7), and a second side wall (10) of the groove (6), which second side wall (10) faces away from the intermediate region (5), being arranged at a wedge angle (α) with respect to the first side wall (9) in such a way that the cross section (11) of the groove (6) increases towards its opening (12), and a separate clamping element (30) being provided which clamps the sealing element (20) in the groove (6) via an angled-over edge (22) of the sealing element (20).

2. Anti-friction bearing (1) according to Claim 1, the shoulder (7) being configured in the first bearing ring (2) or in the second bearing ring (3) in such a way that the outer face (8) of the shoulder (7) is flush with the opening (12) of the groove (6).

3. Anti-friction bearing (1) according to Claim 1, the wedge angle (α) lying in the range between 1° and 10°, in particular in the range between 1° and 5°.

4. Anti-friction bearing (1) according to Claim 3, the wedge angle (α) lying in the range between 2° and 3°.

5. Anti-friction bearing (1) according to one of Claims 1 to 4, the clamping element (30) consisting of a ring or a plurality of ring segments which are arranged in the groove (6) in an evenly distributed manner.

6. Anti-friction bearing (1) according to one of Claims 1 to 5, the clamping element (30) having a wedge-shaped cross-sectional contour (34).

7. Anti-friction bearing (1) according to Claim 6, the cross-sectional contour (34) of the clamping element (30) being such that the wedge angle (β) of the clamping element (30) is equal to the wedge angle (α) of the groove (6) .

8. Anti-friction bearing (1) according to one of Claims 1 to 7, the sealing element (20) being configured from a ring face (21) with the angled-over edge (22) which interacts in a positively locking manner with the first side wall (9) of the groove (6) in the first bearing ring (2) or second bearing ring (3) and in a non-positive manner with the outer face (14) of the second bearing ring (3) or the outer face (13) of the first bearing ring (2) .

9. Anti-friction bearing (1) according to Claim 8, the outer face (24) of the sealing element (20), which outer face (24) faces the intermediate region (5), and the outer face (23) of the angled-over edge (22), which outer face (23) faces the intermediate region (5), being provided with an elastic material (25) which bears against the first side wall (9) of the groove (6), the outer face (13) of the first bearing ring (2) and the outer face (14) of the second bearing ring (3).

## Revendications

1. Palier à roulement (1) comprenant une première bague de palier (2), une deuxième bague de palier (3) et un élément d'étanchéité (20) qui ferme hermétiquement une zone intermédiaire (5) entre la première bague de palier (2) et la deuxième bague de palier (3), l'élément d'étanchéité (20) étant serré dans une rainure (6) de la première bague de palier (2) ou de la deuxième bague de palier (3), une première paroi latérale (9), tournée vers la zone intermédiaire (5), de la rainure (6) s'étendant à angle droit par rapport à une surface extérieure (8) d'un épaulement (7), une deuxième paroi latérale (10), opposée à la zone intermédiaire (5), de la rainure (6) étant disposée suivant un angle de coin (α) par rapport à la première paroi latérale (9) de telle sorte que la section transversale (11) de la rainure (6) s'agrandisse en direction de son ouverture (12), et un élément de serrage (30) séparé étant prévu, lequel serre l'élément d'étanchéité (20) dans la rainure (6) par le biais d'un rebord (22) de l'élément d'étanchéité (20).

2. Palier à roulement (1) selon la revendication 1, dans lequel, dans la première bague de palier (2) ou dans la deuxième bague de palier (3), l'épaulement (7) est réalisé de telle sorte que la surface extérieure (8) de l'épaulement (7) est en affleurement avec l'ouverture (12) de la rainure (6) .

3. Palier à roulement (1) selon la revendication 1, dans lequel l'angle de coin (α) est compris dans la plage entre 1° et 10°, en particulier dans la plage entre 1° et 5°.

4. Palier à roulement (1) selon la revendication 3, dans lequel l'angle de coin (α) est compris dans la plage entre 2° et 3°.

5. Palier à roulement (1) selon l'une quelconque des revendications 1 à 4, dans lequel l'élément de serrage (30) est constitué d'un anneau ou de plusieurs segments annulaires qui sont disposés de manière répartie uniformément dans la rainure (6).

6. Palier à roulement (1) selon l'une quelconque des revendications 1 à 5, dans lequel l'élément de serrage (30) présente un contour de section transversale (34) en forme de coin.

7. Palier à roulement (1) selon la revendication 6, dans lequel le contour de section transversale (34) de l'élément de serrage (30) est tel que l'angle de coin (β) de l'élément de serrage (30) est égal à l'angle de coin (α) de la rainure (6).

8. Palier à roulement (1) selon l'une quelconque des revendications 1 à 7, dans lequel l'élément d'étanchéité (20) est réalisé à partir d'une surface annulaire (21) dotée du rebord (22), lequel coopère par complémentarité de forme avec la première paroi latérale (9) de la rainure (6) dans la première bague de palier (2) ou la deuxième bague de palier (3) et coopère par force avec la surface extérieure (14) de la deuxième bague de palier (3), respectivement avec la surface extérieure (13) de la première bague de palier (2).

9. Palier à roulement (1) selon la revendication 8, dans lequel la surface extérieure (24), tournée vers la zone intermédiaire (5), de l'élément d'étanchéité (20) ainsi que la surface extérieure (23), tournée vers la zone intermédiaire (5), du rebord (22) sont dotées d'un matériau élastique (25), lequel s'appuie contre la première paroi latérale (9) de la rainure (6), la surface extérieure (13) de la première bague de palier (2) et la surface extérieure (14) de la deuxième bague de palier (3).
